(19) Europäisches Patentamt
European Patent Office
Office européen des brevets

(11) **EP 4 324 615 A1**

(12) **EUROPEAN PATENT APPLICATION**
published in accordance with Art. 153(4) EPC

(43) Date of publication:
**21.02.2024  Bulletin 2024/08**

(21) Application number: **22788181.0**

(22) Date of filing: **13.04.2022**

(51) International Patent Classification (IPC):
**B29C 44/00** (2006.01)  **B29C 44/42** (2006.01)
**B29C 44/58** (2006.01)  **B29C 44/60** (2006.01)
**B29C 45/00** (2006.01)  **B29C 45/26** (2006.01)
**B29C 45/80** (2006.01)  **B29K 23/00** (2006.01)
**B29K 105/04** (2006.01)

(52) Cooperative Patent Classification (CPC):
**B29C 44/00; B29C 44/42; B29C 44/58;
B29C 44/60;** B29C 45/00; B29C 45/26; B29C 45/80;
B29K 2023/00; B29K 2105/04

(86) International application number:
**PCT/JP2022/017678**

(87) International publication number:
**WO 2022/220258 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.04.2021  JP 2021069165
31.03.2022  PCT/JP2022/016438**

(71) Applicant: **Prime Polymer Co., Ltd.
Tokyo 104-0028 (JP)**

(72) Inventor: **KAWAMURA, Tatsuji
Sodegaura-shi, Chiba 299-0265 (JP)**

(74) Representative: **J A Kemp LLP
80 Turnmill Street
London EC1M 5QU (GB)**

(54) **INJECTION FOAM MOLDED BODY**

(57)    An object of the present invention is to obtain an injection foam molded body which has combined characteristics that have not been obtained with conventional injection foam molded bodies, such as cushioning characteristics providing softness feeling when the foam molded body is pressed with a finger, while fulfilling a stiffness, which is a characteristic of injection foaming, by using a molding method called an injection foam molding method, and the present invention relates to an injection foam molded body composed of a propylene resin composition, characterized in that when a sample having a size of 50 mm × 150 mm cut from the injection foam molded body is used to carry out a threepoint bending test in which force is applied to the center position of the body with a distance between supports of 100 mm by an indenter at a bending rate of 50 mm/min, a bending elastic gradient evaluated in accordance with JIS K7221-2 is within the range of 27 to 1,000 (N/cm) in a "load-deflection curve" obtained for the amount of deflection in a range of 0 to 10 mm, and when the injection foam molded body is subjected to a test in which a force (load) is applied to a flat surface thereof by a circular indenter with a flat tip having a diameter of 4 mm at a rate of 1 mm/min to push the indenter into the molded body, a press elastic gradient is in the range of 5 to 120 (N/mm), which is an elastic gradient upon pushing, as evaluated in accordance with JIS K7220, in the "force-amount of deformation curve" obtained for a decrease in thickness of the injection foam molded body in a range of 0 to 10%.

[Fig. 1]

EP 4 324 615 A1

EP 4 324 615 A1

**Description**

Technical Field

The present invention relates to an injection foam molded body composed of a propylene resin composition.

Background Art

Propylene polymers have been used in various fields such as daily necessities, kitchenware, packaging films, home appliances, machine parts, electrical parts, and automotive parts because of their low specific gravities and excellent moldability and recyclability. In automotive parts, vehicles have a likelihood of increasing their weights accompanying improvements on their safety, interior comfort, and comfortability, as well as an increase in IT devices, the use ratio of propylene resin compositions containing propylene polymers has been growing. In particular, foam molded bodies composed of propylene resin compositions are lightweight and excellent in molding appearance, thereby rendering them suitable for use in automotive parts.

One of methods of producing injection foam molded bodies composed of thermoplastic resins such as propylene polymers has been known to be a method of using a mold with a variable cavity volume, holding a small cavity volume upon filling the mold with a molten thermoplastic resin containing a foaming agent and then expanding the cavity volume after filling, to then actively promote generation and expansion of bubbles (core-back method).

Moreover, in the core-back method, there has also been proposed a molding method of actively promoting generation and expansion of bubbles by expanding a cavity volume after filling, and then compressing the molded body formed before solidification of the foam body (for example, Patent Literature 1, Patent Literature 2, and Patent Literature 3), and these foam bodies basically have a three-layer structure with a solid skin layer on its surface layer and a foam layer inside.

Citation List

Patent Literature

[Patent Literature 1] JP8-318542A
[Patent Literature 2] JP2009-196284A
[Patent Literature 3] JP2009-208299A

Summary of Invention

Technical Problem

Molded bodies using thermoplastic resin materials generally have various patterns, such as subtle convex and concave portions or patterns that resemble leather, and these patterns are called texture. Since such texture can be formed only by injection molding and do not require painting as well, they are advantageous for automobile interior parts, home appliances, for example, in terms of enabling cost reduction while maintaining their textures. However, there has been a problem of plastic products without leather adhered and even with textured patterns, being hard to the touch, thereby having poor cushioning feeling, and lacking a sense of luxury, compared to parts with actual leather adhered (leather-adhered parts).

An object of the present invention is to obtain an injection foam molded body which has characteristics that have not been obtained with conventional injection foam molded bodies, combining those such as cushioning characteristics providing softness feeling when the foam molded body is pressed with a finger, while fulfilling a stiffness, which is a characteristic of injection foaming, by using a molding method called an injection foam molding method.

Solution to Problem

Namely, the present invention relates to the following [1] to [10] .

[1] An injection foam molded body composed of a propylene resin composition, wherein when a sample having a size of 50 mm $\times$ 150 mm cut from the injection foam molded body is used to carry out a three-point bending test in which force is applied to the center position of the body with a distance between supports of 100 mm by an indenter at a bending rate of 50 mm/min, a bending elastic gradient evaluated in accordance with JIS K7221-2 is within the range of 27 to 1,000 (N/cm) in a "load-deflection curve" obtained for the amount of deflection in a range of 0 to 10 mm, and when the injection foam molded body is subjected to a test in which a force (load) is applied to a flat surface thereof by a circular indenter with a flat tip having a diameter of 4 mm at a rate of 1 mm/min to push the indenter into the molded body, a press elastic gradient is in the range of 5 to 120 (N/mm), which is an elastic gradient upon pushing, as evaluated in accordance with JIS K7220, in a "force-amount of deformation curve" obtained for a decrease in thickness of the injection foam molded body in a range of 0 to 10%.

[2] The injection foam molded body according to item [1], wherein the injection foam molded body comprises five layers of, from a surface side, a solid skin layer (A1)/a foam layer (B1)/a foam layer (C)/a foam layer (B2)/a solid skin layer (A2) (back surface), in a cross-section in a plate thickness direction of the injection foam molded body, the solid skin layers (A1) and (A2) are layers in which a bubbly foam structure is not observed, the foam layer (B1) and the foam layer (B2) are layers satisfying (b-i) to (b-iii) below, and the foam layer (C) has a cell wall curved in a plate thickness direction of a cross-section of the layer (C) ;

(b-i): with a foam cell structure in which a cell is filled with gas in an inside thereof and surrounded by a cell wall;
(b-ii): with an average size of cells in a planar direction of 50 um or larger and 200 um or smaller; and
(b-iii): being composed of cells in which an average size of cells in a cross section in a plate thickness direction with respect to an average size of cells in a planar direction is 1 or more and 6 or less.

[3] The injection foam molded body according to item [2], wherein the foam layer (C) does not satisfy the following (c-i) ;
(c-i): with a foam cell structure in which a cell is filled with gas in an inside thereof and surrounded by a cell wall.
[4] The injection foam molded body according to item [2], wherein the foam layer (C) does not satisfy the following (c-ii) ;
(c-ii): being composed of cells in which an average size of cells in a planar direction is 50 um or larger and 200 um or smaller, or of cells in which an average size of cells in a cross section in a plate thickness direction with respect to an average size of cells in a planar direction is 1 or more and 6 or less.
[5] The injection foam molded body according to item [1] or [2], wherein in the injection foam molded body, thicknesses (averages) of the solid skin layers (A1) and (A2) forming the injection foam molded body are each in a range of 200 to 700 $\mu$m.
[6] The injection foam molded body according to item [1] or [2], wherein the injection foam molded body has a thickness in a range of 2.5 to 10.0 mm and an expansion ratio in a range of 2.1 to 6 times.
[7] The injection foam molded body according to item [1] or [2], wherein the injection foam molded body is partially textured on a surface thereof.
[8] The injection foam molded body according to item [1] or [2], wherein the propylene resin composition is a composition including a propylene polymer (E) as a main component.
[9] The injection foam molded body according to item [1] or [2], wherein the propylene resin composition includes a propylene·ethylene block copolymer (E1), an ethylene·$\alpha$-olefin copolymer (F), and a filler (G).
[10] The injection foam molded body according to item [9], wherein a content of the propylene·ethylene block copolymer (E1) is in a range of 60 to 90 parts by mass, a content of the ethylene·$\alpha$-olefin copolymer (F) is in a range of 10 to 40 parts by mass, and a content of the filler (G) is 30 parts by mass or less,
per 100 parts by mass in total of the propylene·ethylene block copolymer (E1), the ethylene·$\alpha$-olefin copolymer (F), and the filler (G).

Advantageous Effects of Invention

The injection foam molded body of the present invention having cushioning characteristics providing softness feeling when the foam molded body is pressed with a finger, while fulfilling a stiffness, can be suitably used for various applications such as automobile interior parts, electrical appliances, and construction materials.

Brief Description of Drawings

[Fig. 1] Fig. 1 is a cross-sectional image of the injection foam molded body of the present invention and a schematic view of the cross-sectional image thereof.
[Fig. 2] Fig. 2 is a schematic view illustrating operation of a mold (thickness of a thermoplastic resin composition in the mold) in the method of producing an injection foam molded body of the present invention.

Description of Embodiments

<Injection foam molded body>

The injection foam molded body of the present invention (hereinafter may be referred to as "molded body") is composed of a propylene resin composition and has the following physical properties.

When a sample having a size of 50 mm × 150 mm cut from the injection foam molded body is used to carry out a three-point bending test in which force is applied to the center position of the body with a distance between supports of 100 mm by an indenter at a bending rate of 50 mm/min, a bending elastic gradient evaluated in accordance with JIS K7221-2 is within the range of 27 to 1,000 (N/cm) and preferably within the range of 27 to 400 (N/cm) in a "load-deflection curve" obtained for the amount of deflection in a range of 0 to 10 mm, and when the injection foam molded body is subjected to a test in which a force (load) is applied to a flat surface thereof by a circular indenter with a flat tip having a diameter of 4 mm at a rate of 1 mm/min to push the indenter into the molded body, a press elastic gradient is in the range of 5 to 120 (N/mm) and preferably in the range of 10 to 100 (N/mm) which is an elastic gradient upon pushing, as evaluated in accordance with JIS K7220, in the "force-amount of deformation curve" obtained for a decrease in thickness of the injection foam molded body in a range of 0 to 10%.

Molded bodies that satisfy the bending elastic gradient within the above range, can satisfy a stiffness of a current trim (bending elastic modulus 1,000 MPa, thickness 2.3 mm) or higher, for example, when used for automotive parts, for example.

Molded bodies that satisfy the press elastic gradient within the above range, can impart cushioning characteristics, for example, when used for automotive parts, for example, and are effective in improving texture of the molded bodies.

Molded bodies with the press elastic gradient that is the lower limit value or less are, on the other hand, too soft and facilitates deformation, resulting in a lack of stiffness feeling, and molded bodies with the upper limit value of the press elastic gradient, have a high stiffness but do not provide cushioning characteristics.

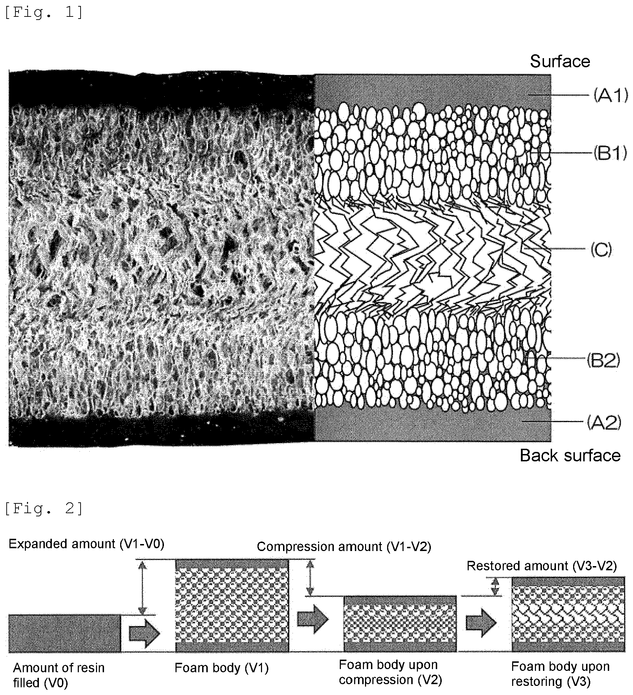

The injection foam molded body of the present invention is characterized in that, in a cross-section in a plate thickness direction of the injection foam molded body, it usually comprises five layers of, from a surface side, a solid skin layer (A1)/a foam layer (B1)/a foam layer (C)/a foam layer (B2)/a solid skin layer (A2) (back surface), in a cross-section in a plate thickness direction of the injection foam molded body, as shown in Fig. 1, the solid skin layers (A1) and (A2) are layers in which a bubbly foam structure is not observed, the foam layer (B1) and the foam layer (B2) are layers satisfying (b-i) to (b-iii) below, and the foam layer (C) has a cell wall curved in a plate thickness direction of a cross-section of the layer (C) :

(b-i): with a foam cell structure in which a cell is filled with gas in an inside thereof and surrounded by a cell wall;
(b-ii): with an average size of cells in a planar direction of 50 um or larger and 200 um or smaller; and
(b-iii): being composed of cells in which an average size of cells in a cross section in a plate thickness direction with respect to an average size of cells in a planar direction is 1 or more and 6 or less.

The aforementioned foam layer (C) forming the molded body of the present invention is a layer in which the cell walls in the plate thickness direction of the cross-section of the foam layer (C) are curved, as described above, and when force is applied to this curved cell walls so as to compress the solid skin layer (A1) of the surface layer, the foam layer (C) deforms and is compressed, resulting in forming a compression deformation region with a press elastic gradient of 120 N/mm or less, and exhibiting a cushioning feeling in the molded body.

Note, however, the foam layer (C) is a layer formed in which in the course of producing the injection foam molded body of the present invention, at least a portion of cell walls of foam cells formed by foaming, breaks or bends so that it partially buckles and tears itself, to partially interconnect the individual form cells, thereby forming a continuous cell wall, and the continuous cell walls in the plate thickness direction form a structure so that they meander left and right between the foam layers (B1) and (B2).

A curvature of the foam layer (C), as described above, is a structure formed of the cell walls of the foam layer (C) that meander left and right between the foam layers (B1) and (B2), as shown in Fig. 1 (C), and this curvature was also confirmed by using the same cross-sectional photograph as in cell size measurement.

Moreover, as shown in Fig. 1 (C), the structure that the cell walls meander left to right between the foam layers (B1) and (B2) is a structure (formed) such that the foam cells are deformed or destroyed, and the cell walls of the foam layer (C) also include an embodiment having no foam cell structure. In other words, a foam injection molded body characterized in that the foam layer (C) does not satisfy the following (c-i), is included.

(c-i): With a foam cell structure in which a cell is filled with gas in an inside thereof and surrounded by a cell wall.

Further, another example of the injection foam molded bodies of the present invention includes an injection foam molded body characterized in that the foam layer (C) does not satisfy the following (c-ii).

(c-ii): Being composed of cells in which an average size of cells in a planar direction is 50 um or larger and 200 um or smaller, or of cells in which an average size of cells in a cross section in a plate thickness direction with respect to an average size of cells in a planar direction is 1 or more and 6 or less.

A method of measuring an average size of foam cells in a planar direction and an average size of cells in a plate thickness direction (in a direction perpendicular to the average size in the planar direction), of the foam layers (B1) and (B2) above, is as follows.

A cross section of an injection foam molded body was cut with a sharp blade so as not to destroy foam cells, and its cross-sectional photograph was photographed by using a digital microscope VHX-6000 (manufactured by Keyence Corporation). The cross-sectional image was magnified 100 times or more and then photographed, and with the cross-sectional image, 10 or more foam cells were determined so that they were arranged substantially evenly in the plate thickness direction, and cell sizes of the foam cells in the plate thickness direction and those in the planar direction were measured by using measurement functions of a digital microscope, and average sizes of each were used as sizes of the foam cells (mm).

The foam cells forming the foam layers (B1) and (B2) above of the molded body of the present invention may be in an independent bubble state as long as they have a closed foam cell structure surrounded by cell walls, however, they are not problematic even though they have an open cell structure with minute holes in the cell walls.

The molded body of the present invention has such a cell shape in the foam layers (B1) and (B2) above that an inside of the molded body has a condition similar to a honeycomb shape, which inhibits deformation and can maintain stiffness of the molded body together with the solid skin layers (A1) and (A2) of the surface layer.

In this region of compressed and deformed cells, the entire region of the foam layer (C) is not necessarily deformed, and curved cell walls are compressed accompanying compression thereof. This foam layer (C) is often basically located in the vicinity of the center of the foam layer.

A surface of the injection foam molded body of the present invention is under high pressure upon filling and is rapidly cooled, which thereby progresses solidification in solid state. Since the solid skin layers (A1) and (A2), which are solidified layers in solid state in contact with this mold, are important layers in forming a molded body, transferring a condition of a mold surface (for example, a textured shape) can impart designability and render an important influence on various physical properties.

These solid skin layers (A1) and (A2) have thicknesses of preferably 200 to 700 $\mu$m and more preferably 200 to 600 $\mu$m on one side of a surface of a molded body. The thicknesses of the solid skin layers (A1) and (A2) less than the lower limit value described above results in providing favorable cushioning characteristics of a molded body, however, may lower stiffness in, for example, bending and deteriorate appearance. The thicknesses thereof exceeding the above upper limit value, on the other hand, may increase the stiffness of a foam body, but lose cushioning characteristics.

The following method is a method of measuring thicknesses of solid skin layers on the surface layer and back surface of the molded body of the present invention.

Using the cross-sectional image used to measure the average size in the plate thickness direction and the average size in the plate thickness direction, of cells of the molded body of the present invention, a line was drawn perpendicular to a line formed by connecting two points on either side of the boundary portion between the solid skin layer (A1) or (A2) and the foam layer (B1) or (B2), a distance from a surface of the solid layer was measured in um units, and the thickness measured was taken as a thickness of the solid skin layer (A1) or (A2). Note, however, when the surface layer of the molded body has such as texture (excluding ribs or other portions that clearly protrude from the surface) and the thickness deviates from place to place, an intermediate position between the apex of the texture and the valley thereof is taken as the edge of the solid layer, and measurement is made in $\mu$m units in the same manner.

A molded body without the foam layer (C) has a structure in which foam cells are stretched in a core-back direction upon molding, thereby providing a molded body with almost no cushioning feeling because the molded body is inhibited from being deformed even when force is applied in the thickness direction.

The injection foam molded body of the present invention usually has a thickness of molded body in the range of 2.5 to 10.0 mm, preferably 2.5 to 7.0 mm, and a foam magnification thereof is in the range of 2.1 to 6 times, preferably 2.2 to 5.0 times.

A thickness of the aforementioned molded body is measured by using a digital caliper CD-S15C (manufactured by Mitutoyo Corporation), tightening an external jaw of the caliper without the molded body, preliminarily confirming that an indicator indicates 0, then facing the molded body perpendicular to the ground or toward the front, and slowly tightening it so as to clamp with the external jaw at the position slightly toward the back thereof, to ensure that the molded body is not tilted. At this time, a thumb roller is used to measure the thickness in mm units, taking care of applying as much even force as possible to sandwich the molded body in order to prevent excess force from being applied thereto.

An expansion ratio of the aforementioned molded body is denoted as a ratio of a plate thickness of a site to be measured in a molded body that has been foamed by core-backing with addition of a foaming agent, and a plate thickness of the same site of the foam body in an non-foam molded body that does not undergo core-backing without addition of the foaming agent (expansion ratio = the ratio of plate thickness at measurement site in foam molded body/thickness at the same measurement site in non-foam molded body). Therefore, the expansion ratio of a molded body that is not flat varies depending on a measurement site, however, a molded body that forms a surface perpendicular to a core-back direction has the highest expansion ratio, and the expansion ratio of the present invention applies a value for a molded body that forms a surface perpendicular to the core-back direction.

<Propylene resin composition>

The injection foam molded body of the present invention is formed of a propylene resin composition. The propylene resin composition contains a propylene polymer (E) as a main component. Note, however, in the present invention, the "main component" refers to the most amount of component in the propylene resin composition, including a single component.

<<Propylene polymer (E)>>

The propylene polymer (E) according to the present invention refers to a polymer in which the content of constituent units derived from propylene is 50 mol% or more, and the content of constituent units derived from propylene in the propylene resin is preferably 90 mol% or more.
The propylene polymer (E) according to the present invention may be one type or two or more types thereof.
The propylene polymer (E) according to the present invention may be a homopolymer of propylene or a copolymer of propylene and a comonomer other than propylene.
A structure of the propylene polymer (E) according to the present invention is not particularly limited and, for example, the constituent unit portion derived from propylene may have an isotactic structure, a syndiotactic structure, or an atactic structure, with the isotactic structure being preferred. Moreover, in the case of the copolymer, it may be of any of a random type (also referred to as random PP), a block type (also referred to as block PP: bPP), or a grafted type.
The comonomer may be any other monomer that can be copolymerized with propylene, and is preferably an $\alpha$-olefin having 2 or 4 to 10 carbon atoms. Specific examples thereof include, for example, ethylene, 1-butene, 1-pentene, 4-methyl-1-pentene, 1-hexene, 1-heptene, 1-octene, 1-nonene, and 1-decene. Among them, ethylene, 1-butene, 1-pentene, 4-methyl-1-pentene, 1-hexene, 1-heptene, and 1-octene are preferred. The comonomer that is one type or two or more types may be used.
The content of constituent units derived from the comonomer in the copolymer is preferably 10 mol% or less from the viewpoint of, for example, flexibility.
Among these propylene polymers (E), a propylene ethylene block copolymer (E-1) including a propylene homopolymer segment formed by polymerizing propylene singly and a propylene·ethylene copolymer segment formed by copolymerizing propylene and ethylene, has a favorable balance of physical properties such as stiffness and impact resistance of the resulting injection foam molded body, which is preferred.
The propylene polymer (E) according to the present invention may be synthesized by a conventionally publicly known method, or commercially available products may be used. Examples of commercially available products include, for example, a polypropylene from SunAllomer Ltd., Prime Polypro from Prime Polymer Co., Ltd., NOVATEC from Japan Polypropylene Corporation, and SCG PP from SCG Plastics Company Limited.
A MFR (in accordance with measurement method of ASTM D 1238, 230°C, 2160 g load) of the propylene polymer (E) according to the present invention is preferably 20 to 200 g/10 minutes and more preferably 30 to 150 g/10 minutes.
The MFR of the propylene polymer (E) according to the present invention within the above range renders excellent injection moldability.
A crystallization temperature (Tc) of the propylene polymer (E) according to the present invention varies depending on factors such as a comonomer content, a molecular weight, and isotacticity, however, it is approximately 100 to 130°C for a homopolymer and a block copolymer and approximately 80 to 110°C for a random copolymer. Incidentally, when a propylene polymer is compounded with, for example, a filler and a nucleating agent, the crystallization temperature becomes 5 to 15°C higher than that indicated above. In order to use an accurate crystallization temperature, it is desirable to measure the crystallization temperature and use that value to determine a mold temperature.
Here, the crystallization temperature is the value measured as a temperature at which a sample is melted once by using a differential scanning calorimeter (DSC), then cooled at a rate of 10 (°C/min), and crystallizes in the course of cooling.

<Ethylene·$\alpha$-olefin copolymer (F)>

The propylene resin composition according to the present invention may contain an ethylene·$\alpha$-olefin copolymer (F) in addition to the propylene polymer (E).

The ethylene·α-olefin copolymer (F) according to the present invention can be obtained by copolymerizing ethylene and at least an α-olefin having 3 to 20 carbon atoms. Examples of α-olefins having 3 to 20 carbon atoms include, for example, propylene, 1-butene, 1-pentene, 1-hexene, 4-methyl-1-pentene, 1-heptene, 1-octene, 1-nonene, 1-decene, 1-undecene, and 1-dodecene. Among them, the α-olefin having 3 to 12 carbon atoms is preferred, and propylene, 1-butene, and 1-octene-1 are more preferred, and 1-octene is further preferred, from the viewpoint of imparting flexibility.

The ethylene·α-olefin copolymer (F) according to the present invention usually has units derived from ethylene in the range of 70 to 99 mol% and preferably in the range of 80 to 97 mol%, and units derived from an α-olefin having 3 to 20 carbon atoms in the range of 1 to 30 mol% and preferably in the range of 3 to 20 mol%, wherein the total amount of units derived from ethylene and units derived from the α-olefin having 3 to 20 carbon atoms is 100 mol%.

In the ethylene·α-olefin copolymer (F) according to the present invention, a monomer having an unsaturated bond can be copolymerized, if necessary. As monomers having unsaturated bonds, for example, conjugated diolefins such as butadiene and isoprene; non-conjugated diolefins such as 1, 4-hexadiene; cyclic diene compounds such as dicyclopentadiene and norbornene derivatives; and acetylenes are preferred. Of these, more preferred are ethylidene norbornene (ENB) and dicyclopentadiene (DCP) in terms of flexibility.

The ethylene·α-olefin copolymer (F) according to the present invention usually has an MFR (ASTM D1238, load 2160 g, temperature 190°C) in the range of 3 to 70 g/10 minutes and preferably 10 to 50 g/10 minutes.

The ethylene·α-olefin copolymer (F) according to the present invention usually has a density in the range of 0.8 to 0.9 g/cm$^3$.

The ethylene·α-olefin copolymer (F) according to the present invention can be produced by using, for example, publicly known polymerization catalysts such as a Ziegler-Natta catalyst, a vanadium catalyst or a metallocene catalyst. A polymerization method is also not particularly limited, and can be polymerized by liquid-phase polymerization methods such as solution polymerization, suspension polymerization, and bulk polymerization methods, gas-phase polymerization methods, and other publicly known polymerization methods. Moreover, these copolymers are also available as commercial products without any particular limitation as long as they contribute to effects of the present invention. Examples of the commercially available products include, for example, product name Engage 8842 (ethylene·1-octene copolymer) and product name Engage 8407 (ethylene·1-octene copolymer), manufactured by The Dow Chemical Company, Vistalon (R) manufactured by Exxon Mobil Corporation, ESPRENE (R) manufactured by Sumitomo Chemical Company, Limited, Mitsui EPT (R), TAFMER P (R), and TAFMER A (R) manufactured by Mitsui Chemicals, Inc.

<Filler (G)>

The thermoplastic resin composition according to the present invention may contain fillers (G), such as inorganic fillers and organic fillers, in addition to the propylene polymer (E). These fillers may be used singly or in combinations of two or more kinds.

<Inorganic filler>

Various publicly known inorganic fillers may be used as the inorganic fillers according to the present invention. Specific examples thereof include, but are not limited thereto, oxides such as aluminum oxide, titanium oxide, zinc oxide, calcium oxide, and silica; sulfates such as barium sulfate; carbonates such as calcium carbonate, magnesium carbonate, and barium carbonate; and silicates such as talc, clay, and mica.

<Organic filler>

Various publicly known organic fillers can be used as the organic fillers according to the present invention. Specific examples thereof include, but are not limited thereto, polymethoxysilane compounds, polystyrene, styrene·acrylic compounds, styrene·methacrylic compounds, and methacrylic compounds, polyurethane compounds, polyester compounds, fluoride compounds, and phenol compounds.

<<Propylene resin compositions

The injection foam molded body of the present invention is formed of a propylene resin composition. The propylene resin composition contains a propylene polymer (E) as a main component.

The propylene resin composition according to the present invention may use the aforementioned propylene ethylene block copolymer (E1) as the above propylene polymer (E).

The propylene resin composition according to the present invention may be a composition containing the above propylene polymer (E) singly, or may be a composition containing the above ethylene·α-olefin copolymer (F) and the above filler (G) in addition to the above propylene polymer (E).

When the propylene resin composition according to the present invention is a composition containing the above propylene·ethylene block copolymer (E1), the above ethylene·α-olefin copolymer (F), and the above filler (G), the propylene resin composition preferably has the content of the above propylene·ethylene block copolymer (E1) in the range of 60 to 90 parts by mass, the content of the above ethylene·α-olefin copolymer (F) in the range of 10 to 40 parts by mass, and the content of the above filler (G) in the range of 30 parts by mass or less, wherein the total of the above propylene·ethylene block copolymer (E1), the above ethylene·α-olefin copolymer (F) and the above filler (G) is 100 parts by mass.

A MFR (in accordance with measurement method of ASTM D1238, 230°C, 2160 g load) of the propylene resin composition according to the present invention is preferably 20 to 150 g/10 minutes and more preferably 20 to 120 g/10 minutes.

<Method of producing injection foam molded body>

The injection foam molded body of the present invention is produced by injection filling a mold with a molten propylene resin composition containing a foaming agent, expanding a cavity thickness of the mold to allow the propylene resin composition to be foamed, cooling, then compressing (shrinking) a molded body while a foamed layer is solidified, and then removing the molded body from the mold. Incidentally, an example of a method of obtaining the molded body of the present invention will be described below, however, the present invention is not limited thereto. The injection foam molded body of the present invention can be produced by a method of producing an injection foam molded body characterized in that a thickness (V3) of the resulting molded body satisfies the relation (V1) > (V3) > (V2), in a method of injection filling a mold cavity with thickness (V0), which is set in a temperature range of [crystallization temperature (Tc)-50°C] to [(Tc)-90°C] of the above propylene resin composition, with a molten propylene resin composition containing a foaming agent, expanding a mold cavity with thickness (V0) by 210 to 600% after 1 second to 12 seconds to foam the propylene resin composition (a cavity thickness at this time is (V1)), cooling for at least 5 seconds, then compressing (reducing) an cavity expanded thickness to 4 to 90% of the expanded thickness (V1-V0) (a cavity thickness upon compression is V2), holding pressure for at least 0.1 seconds, and then removing a molded body from the mold to produce an injection foamed molded body.

As shown in Fig. 2, a propylene resin composition is filled to a mold cavity with thickness (V0) (amount of resin filled in Fig. 2), then the mold expands, resulting in a molded body with a cavity thickness (V1) of the expanded mold, then the mold is compressed to be reduced to a thickness of the molded body of (V2), and the molded body removed from the mold restore a thickness of the molded body, providing a foam molded body with thickness (V3).

<<Use of injection foam molded body>>

The injection foam molded body of the present invention can be suitably used for various applications such as automobile interior parts, electrical appliances, and construction materials, because it has cushioning characteristics that provides a softness feeling when the foam molded body is pressed with a finger, while fulfilling a stiffness. In particular, it is particularly suitable for use in automobile interior parts, because of its excellent balance of lightweight, stiffness, and appearance, as well as excellent heat insulation properties, and can be used in door trims of automobiles, for example, in parts in which cushioning characteristics is to be partially imparted.

Examples

The present invention will be further explained by ways of Examples below. However, the present invention is not limited to these Examples.

Polymers contained in the propylene resin compositions used in Examples and Comparative Examples were, for example, the following polymers.

(1) Propylene polymer (E)

(1-1) Propylene·ethylene block copolymer (E1-1)

As the propylene polymer (E), a propylene·ethylene block copolymer (E1-1) (n-decane soluble moiety = 11% by mass, ethylene content = 41 mol%, intrinsic viscosity [η] = 8 dl/g, MFR (230°C, 2.16 kg) = 85 g/10 minutes) (denoted as (PP-1) in Table 1) was used.

(1-2) Propylene·ethylene block copolymer (E1-2)

As the propylene polymer (E), a propylene·ethylene block copolymer (E1-2) of Prime Polypro, product name NA600 (MFR (230°C, 2.16 kg) = 63 g/10 minutes, density = 970 kg/m$^3$) (denoted as (PP-2) in Table 1) was used.

The PP-2 contains 11% by mass of talc as the filler (G).

(1-3) Propylene·ethylene block copolymer (E1-3)

As the propylene polymer (E), a propylene·ethylene block copolymer (E1-2) of Prime Polypro, product name X5061 (MFR (230°C, 2.16 kg) = 32 g/10 minutes, density = 1030 kg/m$^3$) (denoted as (PP-3) in Table 1) was used.

The PP-3 contains 20% by mass of talc as the filler (G).

(2) Ethylene·α-olefin copolymer (F)

As the ethylene·α-olefin copolymer (F), an ethylene·1-octene copolymer (F-1) (trade name EG8407, MFR (190°C, 2.16 kg) = 30 g/10 minutes, density = 0.87 kg/m$^3$, manufactured by The Dow Chemical Company) was used.

In Examples and Comparative Examples, the physical properties of the propylene resin compositions, polymers, and injection foam molded bodies, were measured by the following methods.

[Melt flow rate (MFR)]

The melt flow rate (MFR) was measured under the conditions of 190°C or 230°C and a load of 2.16 kg in accordance with ASTM D-1238 in the absence of a foaming agent.

[Content of n-decane insoluble moiety (a1) and n-decane soluble moiety (a2) in propylene·ethylene block copolymer (E1)]

To a measurement container made of glass was fed approximately 3 g of propylene·ethylene block copolymer (It was measured to the nearest 10$^{-4}$ g units. This amount was also denoted as b (g) in the following formula), 500 mL of n-decane, and a small amount of a heat stabilizer soluble in n-decane, and the mixture was raised to 150°C in 2 hours while being stirred with stirrer under a nitrogen atmosphere to dissolve the propylene·ethylene block copolymer in n-decane. Then, after having held the mixture at 150°C for 2 hours, it was slowly cooled to 23°C over 8 hours. The liquid containing a precipitate of the resulting propylene·ethylene block copolymer was filtered under reduced pressure through a 25G-4 standard glass filter manufactured by Iwata Glass Industrial Co., Ltd. One hundred mL of the filtrate was collected and dried under reduced pressure to obtain a portion of the aforementioned component (a2). The mass was measured to the nearest 10$^{-4}$ g units. (This mass was denoted as a (g) in the following formula.) Thereafter, the content of component (a1) and that of component (a2) in the propylene·ethylene block copolymer (E1) was then determined by the following formula.

$$\text{Content of component (a2) [\% by mass]} = 100 \times 5a/b$$

$$\text{Content of component (a1) [\% by mass]} = 100 - \text{content of}$$

$$\text{component (a2)}$$

[Intrinsic viscosity ([η]: dl/g)]

It was measured at 135°C using a decalin solvent.

[Density]

It was measured in accordance with ISO 1183 (JIS K7112).

[Measurement of thickness of solid skin layer]

The thickness of the solid skin layer of an injection foam molded body was measured by the following method.

First, a cross-section of an injection foam molded body was cut with a sharp blade so that cells therein are not destroyed, and a photograph of the cross-section was photographed by using a digital microscope VHX-6000 (manufactured by KEYENECE CORPORATION). A cross-sectional image that was magnified 100 times or more, was photographed, and with measurement functions of the digital microscope, a line was drawn perpendicular to a line formed by connecting two points of the left and right in the image of the boundary portion between the solid skin layer and the foam layer, on the cross-sectional image, and a distance from a surface of the solid layer was measured in μm units to determine a thickness of the solid skin layer. Note, however, when the surface layer of the molded body has, for example, texture (excluding ribs or other portions that clearly protrude from the surface), and the thickness deviates from place to place, an intermediate position between the apex of the texture and the valley thereof is regarded as the edge of the solid layer, and measurement is made in the same manner.

Each thickness of the resulting solid skin layers (solid skin layers on the surface and back surface with no foam cells sandwiched the foam layers) was measured in μm units, and an average of the thicknesses was used as a thickness of each solid skin layer (μm).

[Measurement of foam cell sizes of foam cell layers (B1) and (B2)]

Cell sizes of the foam cells in a plate thickness direction and in a planar direction thereof (perpendicular to the plate thickness), distributed in the foam cell layers (B1) and (B2) in contact with solid skin layers of an injection foam molded body, were measured by the following method.

On the cross-sectional image used in the thickness measurement of the solid skin layer, 10 or more foam cells were determined so that they were arranged almost evenly in a plate thickness direction by using the measurement functions of a digital microscope, and cell sizes in the plate thickness direction and those in the planar direction of the foam cells were measured, and average sizes of each were used as sizes (μm) of the foam cell.

[Measurement of meander angle of foam layer (C)]

A meander angle, which indicates the magnitude of a curvature of a cell wall in the foam layer (C) sandwiched between the foam cell layers (B1) and (B2) of the injection foam molded body, was measured by the following method.

Using the measurement functions of a digital microscope, a line was drawn perpendicular to the surface of the molded body, on the cross-sectional image used in the thickness measurement of the solid skin layer, each one tilt leaning to left and right of a meandering portion of the cell walls was picked up from the 1/2 regions above and below the foam layer (C) to measure each tilt from the vertical line, and the measured tilts were averaged to obtain a meander angle. The foam layer (C) hardly deforms when the meander angle is small, and therefore evaluation was made based on a meander angle of 25° or more.

A thickness (plate thickness) of an injection foam molded body was measured by using a digital caliper CD-S15C (manufactured by Mitutoyo Corporation), tightening an external jaw of the caliper without a molded body, preliminarily confirming that an indicator indicates 0, then facing the molded body perpendicular to the ground or toward the front, and slowly tightening it so as to sandwich with the external jaw at the position slightly toward the back thereof, so that the molded body is not tilted. At this time, a thumb roller was used to measure the thickness in mm units, taking care of slowly applying as much even force as possible to sandwich the molded body in order to prevent excess force from being applied thereto.

[Stiffness (bending elastic gradient)]

When an injection foam molded body was cut into a size of 50 mm × 150 mm to perform a bending test (a three-point bending test) in which load is applied at the center position of the body with a distance between supports of 100 mm at a bending rate of 50 mm/min, using an autograph (AG-1kNX plus, manufactured by Shimadzu Corporation) as a testing machine, a gradient of line (= load/deflection) drawn in the method described in JIS K7221-2 was used as a bending elastic gradient (N/cm), which was used for stiffness comparison, in a "load-deflection curve" obtained for the amount of deflection in a range of 0 to 10 mm.

Incidentally, the bending elastic gradient used for the stiffness comparison was evaluated as having a stiffness, which was 27 N/cm or more, obtained by the same measurement conditions as described above for a molded body with a bending elastic modulus of 1,000 MPa and a plate thickness of 2.3 mm.

[Press softness (press elastic gradient)]

When a test where a load is applied to a plane of an injection foam molded body by a circular indenter with a flat tip having a diameter of 4 mm at a rate of 1 mm/min to push the indenter, is carried out, by using an autograph (AG-100kNX, manufactured by Shimadzu Corporation) as a testing machine, a gradient of a line (= force/amount of deformation) drawn in the method described in JIS K7220 was used as a press elastic gradient (N/mm), which was used an index of the press softness, in a "force-amount of deformation curve" obtained for a decrease in thickness of the molded body in a range of 0 to 10%.

Incidentally, the press elastic gradient used for the press softness comparison was evaluated as having the press softness being ninety percent or less of the press elastic gradient (press elastic gradient of 120 N/mm or less) obtained by the same measurement conditions described above for a molded body using a MILASTOMER 7030BS (manufactured by Mitsui Chemicals, Inc.) with a plate thickness of 1.8 mm.

[Cushioning characteristics]

The following evaluation was conducted based on whether or not a molded body felt press softness when pressed with a finger.

When pressing a surface with a finger, there arises a cushioning feeling: O
When pressing a surface with a finger, there arises no cushioning feeling: X

<Example 1>

To a propylene resin composition obtained by having mixed 76 parts by mass of the above PP-1 and 24 parts by mass of the above F-1 (total of 100 parts by mass) and processing the mixture into pellets with a normal pellet shape by using an extruder, were added 5 parts by mass as an inorganic foaming agent in a $CO_2$ foaming agent master batch (product name EE515, manufactured by Eiwa Chemical Ind. Co., Ltd.) per 100 parts by mass of the composition, 2.5 parts by mass of a $N_2$ foaming agent master batch (product name: EE206 manufactured by Eiwa Chemical Ind. Co., Ltd.) per 100 parts by weight of the composition, and 3 parts by weight of a black master batch as a coloring agent are mixed, and the mixture was then fed into a hopper of an injection molding machine and melt kneaded. Note however, each foaming agent used was obtained by kneading the foaming agent into a low-density polyethylene to prepare a master batch, thereby the actual foaming agent component was equivalent to 3% by weight. The composition of the propylene resin composition used in Example 1 is shown in Table 1. An injection molding machine (apparatus name: J350ADS, manufactured by The Japan Steel Works, Ltd.) was used to carry out core-back injection foam molding under the following conditions to obtain a platy injection foam molded body, a surface of which was covered by a skin layer.

Cavity size: Length 400 mm, width 200 mm, filling resin thickness 1.8 mm
Gate: One point direct gate in the center of cavity
Injection temperature: 205°C
Mold surface temperature: 50°C
Mold cavity clearance (L0) upon injection: 1.8 mm
Injection ratio: 309 cc/s
Molding machine core back time setting: 0.1 s (time from the start of core back to the end of core back)
Time from injection completion to core back start: 5.8 s
Core-back amount: 5 mm
Compression start time: 40 s after core-back completion
Compression amount from the state of core-back: 1 mm

The resulting molded body had a plate thickness of 6.3 mm. The physical properties of the resulting molded body were measured by the method described above. The resulting molded body had a five-layer structure, and the conditions of foam cells of the foam cell layers (B1) and (B2), the meandering condition of the foam layer (C), the bending elastic gradient, the press elastic gradient, and the cushioning characteristics were favorable.
The results are shown in Table 1.

<Example 2>

A molded body was obtained in the same manner as in Example 1, except that the amount of compression from the state of core-back was set to 2 mm. The resulting molded body had a plate thickness of 6.2 mm. The physical properties of the resulting molded body were measured by the method described above. The resulting molded body had a five-layer structure, and the conditions of foam cells in the foam cell layers (B1) and (B2), the meandering condition of the foam layer (C), the bending elastic gradient, the press elastic gradient, and the cushioning characteristics were favorable.
The results are shown in Table 1.

<Example 3>

A molded body was obtained in the same manner as in Example 1, except that the amount of compression from the state of core-back was set to 3 mm. The resulting molded body had a plate thickness of 5.9 mm. The physical properties of the resulting molded body were measured by the method described above. The resulting molded body had a five-layer structure, and the conditions of foam cells in the foam cell layers (B1) and (B2), the meandering condition of the foam layer (C), the bending elastic gradient, the press elastic gradient, and the cushioning characteristics were favorable.
The results are shown in Table 1.

<Example 4>

A thickness of resin filled was set to 1.5 mm, and a cavity clearance upon injection was also set to 1.5 mm. Molding was also carried out in the same manner as in Example 2, except that the time from the injection completion to the core-back start was 3.8 s, the core-back amount was 3 mm, and the compression start time was 30 s. The resulting molded body had a plate thickness of 4.1 mm. The physical properties of the resulting molded body were measured by the method described above. The resulting molded body had a five-layer structure, and the conditions of foam cells in the foam cell layers (B1) and (B2), the meandering condition of the foam layer (C), the bending elastic gradient, the press elastic gradient, and the cushioning characteristics were favorable.
The results are shown in Table 1.

<Example 5>

Molding was carried out under the same conditions as in Example 4, except that 6 parts by mass of an inorganic foaming agent masterbatch (product name EE515, manufactured by Eiwa Chemical Ind. Co., Ltd.) per 100 parts by mass of the composition were used as the foaming agent. The resulting molded body had a plate thickness of 4.1 mm. The physical properties of the resulting molded body were measured as described above. Although the foaming condition resulted in somewhat larger cells, the resulting molded body had a five-layer structure, and the conditions of the foam cells in the foam cell layers (B1) and (B2), the meandering state of the foam layer (C), the bending elastic gradient, the press elastic gradient, and the cushioning characteristics were favorable.
The results are shown in Table 1.

<Example 6>

A molded body was obtained in the same manner, except that the aforementioned PP-2 (talc-containing propylene resin composition) was used instead of the propylene resin composition used in Example 1. The resulting molded body had a plate thickness of 5.9 mm. The physical properties of the resulting molded body were measured by the method described above. The resulting molded body had a five-layer structure, and the conditions of foam cells in the foam cell layers (B1) and (B2), the meandering condition of the foam layer (C), the bending elastic gradient, the press elastic gradient, and the cushioning characteristics were favorable.
The results are shown in Table 1.

<Example 7>

A molded body was obtained in the same manner, except that the aforementioned PP-3 (talc-containing propylene resin composition) was used instead of the propylene resin composition used in Example 1. The resulting molded body had a plate thickness of 6.1 mm. The physical properties of the resulting molded body were measured by the method described above. The resulting molded body had a five-layer structure, and the conditions of the foam cells in the foam cell layers (B1) and (B2), the meandering condition of the foam layer (C), the bending elastic gradient, the press elastic gradient, and the cushioning characteristics were favorable.
The results are shown in Table 1.

<Comparative Example 1>

Molding was carried out under the same conditions as in Example 1, except that the molded body was removed without core-backing or compression after injection. The resulting molded body was not foamed and was a solid molded body with a plate thickness of 1.8 mm. The physical properties of the resulting molded body were measured by the method described above. The molded body was in a solid state and had a low bending elastic gradient, high press elastic gradient, thereby rendering the insufficient cushioning feeling.

The results are shown in Table 1.

<Comparative Example 2>

Molding was carried out under the same conditions as in Example 1, except that the core-back amount was 1 mm and the amount of compression from the state of core-back was 0 mm. The physical properties of the resulting molded body were measured by the method described above. The resulting molded body had a three-layer structure without the foam layer (C) and a plate thickness of 2.8 mm, the foaming condition was favorable, and the bending elastic gradient was satisfactory, however, the press elastic gradient was high, thereby resulting in providing the insufficient cushioning feeling.

The results are shown in Table 1.

<Comparative Example 3>

Molding was carried out under the same conditions as in Example 1, except that the core-back amount was 3 mm and the amount of compression from the state of core-back was 0 mm. The physical properties of the resulting molded body were measured by the method described above. The resulting molded body had a three-layer structure without the foam layer (C) and a plate thickness of 4.6 mm, the foaming condition was favorable, and the bending elastic gradient was satisfactory, however, the press elastic gradient was high, thereby resulting in providing the insufficient cushioning feeling.

The results are shown in Table 1.

<Comparative Example 4>

Molding was carried out under the same conditions as in Example 1, except that the core-back amount was 5 mm and the amount of compression from the state of core-back was 0 mm. The physical properties of the resulting molded body were measured by the method described above. The resulting molded body had a three-layer structure without the foam layer (C) and a plate thickness of 6.5 mm, the foaming condition was favorable, and the bending elastic gradient was satisfactory, however, the press elastic gradient was high, thereby resulting in providing the insufficient cushioning feeling.

The results are shown in Table 1.

<Comparative Example 5>

Molding was carried out under the same conditions as in Example 4, except that the molded body was removed without core-backing or compression after injection. The physical properties of the resulting molded body were measured by the method described above. The resulting molded body was not foamed, had a solid plate thickness of 1.5 mm, the insufficient bending elastic gradient and high press elastic gradient, thereby resulting in providing the insufficient cushioning feeling.

The results are shown in Table 1.

<Comparative Example 6>

Molding was carried out under the same conditions as in Example 4, except that the core-back amount was 3 mm and the amount of compression from the state of core-back was 0 mm. The physical properties of the resulting molded body were measured by the method described above. The resulting molded body had a three-layer structure without the foam layer (C) and a plate thickness of 4.4 mm, the foaming condition was favorable, and the bending elastic gradient was satisfactory, however, the press elastic gradient was high, thereby resulting in providing the insufficient cushioning feeling.

The results are shown in Table 1.

[Table 1]

Table 1

| | | Example 1 | Example 2 | Example 3 | Example 4 | Example 5 | Example 6 | Example 7 |
|---|---|---|---|---|---|---|---|---|
| Composition | PP-1 | 76 | 76 | 76 | 76 | 76 | | |
| | PP-2 | | | | | | 100 | |
| | PP-3 | | | | | | | 100 |
| | F-1 | 24 | 24 | 24 | 24 | 24 | | |
| Bending elastic gradient (N/cm): K1 | $27 \leq K1 \leq 1000$ | 123 | 118 | 95 | 49 | 50 | 92 | 92 |
| Press elastic gradient (N/mm): K2 | $5 \leq K2 \leq 120$ | 48 | 33 | 29 | 71 | 56 | 28 | 30 |
| Cushioning characteristics (presence of cushionina feeling (O)/absence (X)) | | ○ | ○ | ○ | ○ | ○ | ○ | ○ |
| Cell structure B1, B2 (in the case of those having a five-layer structure and satisfying (b-i) to (b-iii), they are evaluated as O and in the case of those not satisfying all the items, they are evaluated as (X)) | | ○ | ○ | ○ | ○ | ○ | ○ | ○ |
| Cell structure C (in the case thereof not satisfying any one of (b-i) to (b-iii) with a curvature (meander angle of 25°), it is evaluated as (O) and in the case of the structure C not satisfying the items, it is evaluated as (X)) | | ○ | ○ | ○ | ○ | ○ | ○ | ○ |
| CB start time after injection completion | | 5.8 | 5.8 | 5.8 | 3.8 | 3.8 | 5.8 | 5.8 |
| Compression start time after CB completion | | 40 | 40 | 40 | 30 | 30 | 40 | 40 |
| Filling thickness (mm) | V0 | 1.8 | 1.8 | 1.8 | 1.5 | 1.5 | 1.8 | 1.8 |
| CB amount (mm) | V1-V0 | 5.0 | 5.0 | 5.0 | 3.0 | 3.0 | 5.0 | 5.0 |
| Thickness after foaming (mm) | V1 | 6.8 | 6.8 | 6.8 | 4.5 | 4.5 | 6.8 | 6.8 |
| Expansion ratio upon CB | V1/V0 | 378 | 378 | 378 | 300 | 300 | 378 | 378 |

EP 4 324 615 A1

14

(continued)

| | | Example 1 | Example 2 | Example 3 | Example 4 | Example 5 | Example 6 | Example 7 |
|---|---|---|---|---|---|---|---|---|
| Composition | PP-1 | 76 | 76 | 76 | 76 | 76 | | |
| | PP-2 | | | | | | 100 | |
| | PP-3 | | | | | | | 100 |
| | F-1 | 24 | 24 | 24 | 24 | 24 | | |
| Thickness after compression (mm) | V2 | 5.8 | 4.8 | 3.8 | 2.5 | 2.5 | 3.8 | 3.8 |
| Compression amount (mm) | V1-V2 | 1.0 | 2.0 | 3.0 | 2.0 | 2.0 | 3.0 | 3.0 |
| CB amount upon compression (mm) | V2-V0 | 4.0 | 3.0 | 2.0 | 1.0 | 1.0 | 2.0 | 2.0 |
| Compression amount/CB amount (%) | (V1-V2)/(V1-V0) | 20 | 40 | 60 | 67 | 67 | 60 | 60 |
| Expansion ratio upon compression (%) | (V1-V0)/(V2-V0) | 125 | 167 | 250 | 300 | 300 | 250 | 250 |
| Plate thickness of molded body obtained (mm) | V3 | 6.3 | 6.2 | 5.7 | 4.1 | 4.1 | 5.9 | 6.1 |
| Final expansion ratio (-) | N=V3/V0 | 3.5 | 3.4 | 3.2 | 2.7 | 2.7 | 3.3 | 3.4 |
| Restoring amount (volume) | V3-V2 | 0.5 | 1.4 | 1.9 | 1.6 | 1.6 | 2.1 | 2.3 |
| Thickness of layer with compressed and deformed cells (mm) | | 0.7 | 1.3 | 1.8 | 1.5 | 1.5 | 1.9 | 2.0 |
| Ratio of thickness of layer with compressed and deformed cells to plate thickness (%) | | 11 | 20 | 31 | 37 | 37 | 33 | 33 |
| Decrease in thickness of molded body with respect to thickness upon CB (presence (O)/absence (X)) | V1>V3 | ○ | ○ | ○ | ○ | ○ | ○ | ○ |
| Restoring of thickness by unloading of compression force (presence (O)/absence (X)) | V3>V2 | ○ | ○ | ○ | ○ | ○ | ○ | ○ |
| Ratio of thickness upon compression and thickness upon restoring = Thickness upon restoring/thickness upon compression (%) | V3/V2 | 1.09 | 1.29 | 1.50 | 1.64 | 1.64 | 1.55 | 1.61 |

EP 4 324 615 A1

(continued)

| | | Example 1 | Example 2 | Example 3 | Example 4 | Example 5 | Example 6 | Example 7 |
|---|---|---|---|---|---|---|---|---|
| Composition | PP-1 | 76 | 76 | 76 | 76 | 76 | | |
| | PP-2 | | | | | | 100 | |
| | PP-3 | | | | | | | 100 |
| | F-1 | 24 | 24 | 24 | 24 | 24 | | |
| Ratio of restoring to compression = Restoring amount/compression amount (%) | (V3-V2)/ (V1-V2) | 50 | 70 | 63 | 80 | 80 | 70 | 77 |
| Solid skin layer thickness ($\mu$m) | | 493 | 500 | 502 | 478 | 490 | 506 | 510 |

| | | Comparative Example 1 | Comparative Example 2 | Comparative Example 3 | Comparative Example 4 | Comparative Example 5 | Comparative Example 6 | |
|---|---|---|---|---|---|---|---|---|
| Composition | PP-1 | 76 | 76 | 76 | 76 | 76 | 76 | |
| | PP-2 | | | | | | | |
| | PP-3 | | | | | | | |
| | F-1 | 24 | 24 | 24 | 24 | 24 | 24 | |
| Bending elastic gradient (N/cm): K1 | $27 \leq K1 \leq 1000$ | 11 | 31 | 94 | 171 | 6 | 65 | |
| Press elastic gradient (N/mm): K2 | $5 \leq K2 \leq 120$ | 2837 | 871 | 266 | 131 | 3107 | 168 | |
| Cushioning characteristics (presence of cushioning feeling (O)/absence (X)) | | X | X | X | X | X | X | |
| Cell structure B1, B2 (in the case of those having a five-layer structure and satisfying (b-i) to (b-iii), they are evaluated as O and in the case of those not satisfying all the items, they are evaluated as (X)) | | X | X | X | X | X | X | |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| Composition | PP-1 | 76 | 76 | 76 | 76 | 76 | 76 |
| | PP-2 | | | | | | |
| | PP-3 | | | | | | |
| | F-1 | 24 | 24 | 24 | 24 | 24 | 24 |
| Cell structure C (in the case thereof not satisfying any one of (b-i) to (b-iii) with a curvature (meander angle of 25°), it is evaluated as (O) and in the case of the structure C not satisfying the items, it is evaluated as (X)) | | X | X | X | X | X | X |
| CB start time after injection completion | | - | 5.8 | 5.8 | 5.8 | 3.8 | 3.8 |
| Compression start time after CB completion | | 40 | 40 | 40 | 40 | 30 | 30 |
| Filling thickness (mm) | V0 | 1.8 | 1.8 | 1.8 | 1.8 | 1.5 | 1.5 |
| CB amount (mm) | V1-V0 | 0.0 | 1.0 | 3.0 | 5.0 | 0.0 | 3.0 |
| Thickness after foaming (mm) | V1 | 1.8 | 2.8 | 4.8 | 6.8 | 1.5 | 4.5 |
| Expansion ratio upon CB | V1/V0 | 100 | 156 | 267 | 378 | 100 | 300 |
| Thickness after compression (mm) | V2 | 1.8 | 2.8 | 4.8 | 6.8 | 1.5 | 4.5 |
| Compression amount (mm) | V1-V2 | 0.0 | 0.0 | 0.0 | 0.0 | 0.0 | 0.0 |
| CB amount upon compression (mm) | V2-V0 | 0.0 | 1.0 | 3.0 | 5.0 | 0.0 | 3.0 |
| Compression amount/CB amount (%) | (V1-V2)/(V1-V0) | - | 0 | 0 | 0 | - | 0 |
| Expansion ratio upon compression (%) | (V1-V0)/(V2-V0) | - | 100 | 100 | 100 | - | 100 |
| Plate thickness of molded body obtained (mm) | V3 | 1.8 | 2.8 | 4.6 | 6.5 | 1.5 | 4.4 |
| Final expansion ratio (-) | N=V3/V0 | 1.0 | 1.6 | 2.6 | 3.6 | 1.0 | 2.9 |
| Restoring amount (volume) | V3-V2 | 0.0 | 0.0 | -0.2 | -0.3 | 0.0 | -0.1 |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| Composition | PP-1 | 76 | 76 | 76 | 76 | 76 | 76 |
| | PP-2 | | | | | | |
| | PP-3 | | | | | | |
| | F-1 | 24 | 24 | 24 | 24 | 24 | 24 |
| Thickness of layer with compressed and deformed cells (mm) | | 0.0 | 0.0 | 0.0 | 0.0 | 0.0 | 0.0 |
| Ratio of thickness of layer with compressed and deformed cells to plate thickness (%) | | 0 | 0 | 0 | 0 | 0 | 0 |
| Decrease in thickness of molded body with respect to thickness upon CB (presence (O)/absence (X)) | V1>V3 | X | X | O | O | X | O |
| Restoring of thickness by unloading of compression force (presence (O)/absence (X)) | V3>V2 | X | X | X | X | X | X |
| Ratio of thickness upon compression and thickness upon restoring = Thickness upon restoring/thickness upon compression (%) | V3/V2 | 1.00 | 1.00 | 0.96 | 0.96 | 1.00 | 0.98 |
| Ratio of restoring to compression = Restoring amount/compression amount (%) | (V3-V2)/ (V1-V2) | - | - | - | - | - | - |
| Solid skin layer thickness ($\mu$m) | | - | 551 | 523 | 490 | - | 482 |

Industrial Applicability

The injection foam molded body of the present invention can be suitably used for various applications such as automobile interior parts, electrical appliances, and construction materials because it achieves both lightweight and texture. In particular, the injection foam molded body has an excellent balance of lightweight, stiffness, and appearance, as well as excellent heat insulation properties, allowing it to be particularly suitably used in automobile interior parts.

Reference Signs List

A1, A2: Solid skin layers
B1, B2: Foam cell layers
C: Foam layer without foam cells

**Claims**

1. An injection foam molded body composed of a propylene resin composition, wherein when a sample having a size of 50 mm × 150 mm cut from the injection foam molded body is used to carry out a three-point bending test in which force is applied to the center position of the body with a distance between supports of 100 mm by an indenter at a bending rate of 50 mm/min, a bending elastic gradient evaluated in accordance with JIS K7221-2 is within the range of 27 to 1,000 (N/cm) in a "load-deflection curve" obtained for the amount of deflection in a range of 0 to 10 mm, and when the injection foam molded body is subjected to a test in which a force (load) is applied to a flat surface thereof by a circular indenter with a flat tip having a diameter of 4 mm at a rate of 1 mm/min to push the indenter into the molded body, a press elastic gradient is in the range of 5 to 120 (N/mm), which is an elastic gradient upon pushing, as evaluated in accordance with JIS K7220, in a "force-amount of deformation curve" obtained for a decrease in thickness of the injection foam molded body in a range of 0 to 10%.

2. The injection foam molded body according to claim 1, wherein the injection foam molded body comprises five layers of, from a surface side, a solid skin layer (A1)/a foam layer (B1)/a foam layer (C)/a foam layer (B2)/a solid skin layer (A2) (back surface), in a cross-section in a plate thickness direction of the injection foam molded body,
the solid skin layers (A1) and (A2) are layers in which a bubbly foam structure is not observed, the foam layer (B1) and the foam layer (B2) are layers satisfying (b-i) to (b-iii) below, and the foam layer (C) has a cell wall curved in a plate thickness direction of a cross-section of the layer (C) ;

   (b-i): with a foam cell structure in which a cell is filled with gas in an inside thereof and surrounded by a cell wall;
   (b-ii): with an average size of cells in a planar direction of 50 um or larger and 200 um or smaller; and
   (b-iii): being composed of cells in which an average size of cells in a cross section in a plate thickness direction with respect to an average size of cells in a planar direction is 1 or more and 6 or less.

3. The injection foam molded body according to claim 2, wherein the foam layer (C) does not satisfy the following (c-i) ;
   (c-i): with a foam cell structure in which a cell is filled with gas in an inside thereof and surrounded by a cell wall.

4. The injection foam molded body according to claim 2, wherein the foam layer (C) does not satisfy the following (c-ii) ;
   (c-ii): being composed of cells in which an average size of cells in a planar direction is 50 um or larger and 200 um or smaller, or of cells in which an average size of cells in a cross section in a plate thickness direction with respect to an average size of cells in a planar direction is 1 or more and 6 or less.

5. The injection foam molded body according to claim 1 or 2, wherein in the injection foam molded body, thicknesses (averages) of the solid skin layers (A1) and (A2) forming the injection foam molded body are each in a range of 200 to 700 $\mu$m.

6. The injection foam molded body according to claim 1 or 2, wherein the injection foam molded body has a thickness in a range of 2.5 to 10.0 mm and an expansion ratio in a range of 2.1 to 6 times.

7. The injection foam molded body according to claim 1 or 2, wherein the injection foam molded body is partially textured on a surface thereof.

8. The injection foam molded body according to claim 1 or 2, wherein the propylene resin composition is a composition comprising a propylene polymer (E) as a main component.

9. The injection foam molded body according to claim 1 or 2, wherein the propylene resin composition comprises a propylene ·ethylene block copolymer (E1), an ethylene·$\alpha$-olefin copolymer (F), and a filler (G).

10. The injection foam molded body according to claim 9, wherein a content of the propylene ·ethylene block copolymer (E1) is in a range of 60 to 90 parts by mass, a content of the ethylene·$\alpha$-olefin copolymer (F) is in a range of 10 to 40 parts by mass, and a content of the filler (G) is 30 parts by mass or less,

per 100 parts by mass in total of the propylene ·ethylene block copolymer (E1), the ethylene·$\alpha$-olefin copolymer (F), and the filler (G).

[Fig. 1]

Surface

(A1)

(B1)

(C)

(B2)

(A2)

Back surface

[Fig. 2]

Expanded amount (V1-V0)

Compression amount (V1-V2)

Restored amount (V3-V2)

Amount of resin filled (V0)

Foam body (V1)

Foam body upon compression (V2)

Foam body upon restoring (V3)

**EP 4 324 615 A1**

## INTERNATIONAL SEARCH REPORT

| International application No. |
|---|
| **PCT/JP2022/017678** |

### A. CLASSIFICATION OF SUBJECT MATTER

*B29C 44/00*(2006.01)i; *B29C 44/42*(2006.01)i; *B29C 44/58*(2006.01)i; *B29C 44/60*(2006.01)i; *B29C 45/00*(2006.01)i;
*B29C 45/26*(2006.01)i; *B29C 45/80*(2006.01)i; *B29K 23/00*(2006.01)n; *B29K 105/04*(2006.01)n
FI:    B29C44/00 D; B29C44/42; B29C44/58; B29C44/60; B29C45/00; B29C45/26; B29C45/80; B29K23:00; B29K105:04

According to International Patent Classification (IPC) or to both national classification and IPC

### B. FIELDS SEARCHED

Minimum documentation searched (classification system followed by classification symbols)

B29C44/00-44/60; B29C67/20; B29C45/00-45/84; C08J9/00-9/42; B29K23/00; B29K105/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-177671 A (KYOTO UNIV.) 05 October 2017 (2017-10-05) whole document, particularly, claims, paragraphs [0008], [0040]-[0064], [0089]-[0094], fig. 2 | 1-10 |
| A | JP 8-318542 A (IDEMITSU PETROCHEM. CO., LTD.) 03 December 1996 (1996-12-03) whole document, particularly, claims, paragraph [0028], fig. 1 | 1-10 |
| A | JP 2012-233055 A (HAYASHI ENGINEERING INC.) 29 November 2012 (2012-11-29) whole document | 1-10 |
| A | JP 2012-000909 A (KANEKA CORP.) 05 January 2012 (2012-01-05) whole document | 1-10 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2022/017678** |

| Patent document cited in search report | | | Publication date (day/month/year) | Patent family member(s) | Publication date (day/month/year) |
|---|---|---|---|---|---|
| JP | 2017-177671 | A | 05 October 2017 | (Family: none) | |
| JP | 8-318542 | A | 03 December 1996 | (Family: none) | |
| JP | 2012-233055 | A | 29 November 2012 | US 2014/0044954 A1 whole document WO 2012/147529 A1 | |
| JP | 2012-000909 | A | 05 January 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8318542 A
- JP 2009196284 A
- JP 2009208299 A